# EUROPÄISCHE PATENTSCHRIFT

(11) **EP 1 584 461 B1**
(45) Veröffentlichungstag und Bekanntmachung des Hinweises auf die Patenterteilung: **24.12.2008**
(21) Anmeldenummer: 04030993.2
(22) Anmeldetag: 29.12.2004
(51) Int. Cl.: B32B 3/18, B32B 21/13, B27D 1/06

(54) **Leichtbauplatte**
Lightweight panel
Panneau léger

(30) Priorität: 06.02.2004 DE 202004001845 U; 02.04.2004 DE 202004005479 U
(43) Veröffentlichungstag der Anmeldung: 12.10.2005
(73) Patentinhaber: Moralt Tischlerplatten GmbH & Co. KG, 83646 Bad Tölz (DE)
(72) Erfinder: Hoffmann, Helmut, 83674 Gaissach (DE)
(74) Vertreter: Säger, Manfred

(56) Entgegenhaltungen:
- CA-A1- 2 084 260
- DE-A1- 4 030 774
- DE-U1- 20 108 858
- GB-A- 240 742
- GB-A- 491 120

## Beschreibung

Die Erfindung betrifft eine Leichtbauplatte gemäss dem Oberbegriff des Hauptanspruchs, nämlich Leichtbauplatte aus miteinander verbundenen, vorzugweise verklebten Lagen aus Werkstoffen, insbesondere Möbel- oder Küchenplatte oder für den Einsatz in Luft-, Wasser- und Landfahrzeugen, mit einer mittleren Lage einer Massivholz-Kernachicht aus Hirnholz mit zwei im wesentlichen senkrecht zu deren Holzfasern beziehungsweise Kapillaren sowie zueinander parallelen Plattenebenen und mit zumindest je einer, den äusseren Abschluss der Leichtbauplatte bildenden, die Aussenschicht beiderseits der kernschicht bildenden Lange, welche Kernschicht aus einem Leichtholz mit einer Dichte von unter 250 kg/m³ besteht.

Solche Leichtbauplatten sind an sich bekannt (DB 201 08 858 U1) . Diese Leichtbauplatten haben sich zwar bewährt, sie sind aber nicht für alle Anwendungezwecke stabil genug.

Mehrschichtholzplatten mit fünf Schichten aus Span- oder Fasermaterial sind bekannt (DB 40 30 774 A1).

Es sind auch mehrschichtige Holzwerkstoffplatten mit einer Mittellage aus Holzlatten (GB 491 120) oder verleimten Holzblöcken bekannt (CA-A1-2 084 260), deren Fasern aber senkrecht zur Oberfläche der Platte verläuft: Auch bei Platten mit Mittellagen aus verleimten Blöcken aus Furnierholzlagen(GB 240 742 A) verlaufen die Fasern senkrecht zur Plattenoberfläche.

Der Erfindung liegt deshalb die Aufgabe zugrunde, eine gattungsgemässe Leichtbauplatte gemäss dem Oberbegriff des Hauptanspruche stabiler auszugestalten.

Diese Aufgabe wird bei einer gattungsgemässen Platte gemäss dem Oberbegriff des Hauptanspruchs erfindungsgemäss durch dessen kennzeichnende Merkmale, also dadurch gelöst, dass zwischen der Kernschicht und zumindest einer der beiden Aussenschichten eine damit verbundene Lage aus im wesentlichen gleich geformten, langgestreckten und nur nebeneinander angeordneten sowie in dieser Anordnung miteinander verleimten quaderförmigen Stücken aus Holz vorgesehen ist, wobei die Kapillaren beziehungsweise Holzfasern der quaderförmigen Stücke aller dieser Stücke der Lage sowohl zueinander als auch bezüglich der Plattenebene im wesentlichen parallel verlaufen.

Die erfindungsgemässe Leichtbauplatte weist also zwischen der Kernschicht und zumindest einer der beiden Aussenschichten eine damit verbundene Zwischenlage aus einer Vielzahl von miteinander verleimten, i.w. quaderförmigen, vorzugsweise langgestreckten Stücken auf. Diese Zwischenlage kann entweder als Stäbchenlage oder als Stablage ausgebildet sein.

Die Stäbchen bei der Stäbchenlage sind hierbei beispielsweise aus mehreren miteinander verleimten Schichten von Schälfurnieren gebildet, wobei die Schichten der Schälfurniere parallel zueinander und senkrecht zu der Plattenbene angeordnet sind. Die durch diesen Aufbau resultierende Stäbchenlage mit im wesentlichen aufrecht (rechtwinklig zu der Plattenebene) stehenden Schälfurnieren verleiht der erfindungsgemässen Leichtbauplatte durch deren homogenen Aufbau und dem damit einhergehenden homogenen Quell- und Schwundmass innerhalb des Aufbaus der Leichtbauplatte bei Änderung der Feuchte eine ruhige Oberfläche. Die langen Fasern der -langgestreckten- Stäbchen der Stäbchenlage verleihen der Leichtbauplatte überdies gute elastomechanische Eigenschaften und einen hinreichend guten Widerstand gegen Schraubenauszug. Insgesamt ergibt sich mit der Stäbchenlage also eine stabilere Leichtbauplatte mit hervorragenden Festigkeitseigenschaften,

Bei Einsatz einer Stablage als Zwischenlage ergibt sich erfindungsgemäss gegenüber solchen mit einer Stäbchenlage eine in der Fertigung günstigere sowie immer noch hinreichend stabile Leichtbauplatte, denn derHolzstamm kann praktisch ohne Abfall zu Brettern gesägt werden.

In bevorzugter Weiterbildung der Erfindung ist die Massivholz-Kernschicht aus Balsa-Hirnholz ausgebildet.

Mit Vorteil besteht zumindest eine der beiden Aussenschichten aus einem Holzwerkstoff, um das Gewicht gering zu halten. Bei grösseren Beanspruchungen der Aussenseite der Oberfläche der Aussenschichten können hier aber auch andere Verbundwerkstoffe oder Werkstoffschichten aus Metall, beispielsweise Aluminium vorgesehen werden.

Für einfache Anwendungen empfiehlt sich dem Durchschnittsfachmann aber als Absperrung eine Furnierschicht, deren Holzfasern parallel zu der Aussenschichten und zugleich rechtwinklig zu jenen Fasern entweder der Stäbchen der Stäbchenlage oder den Holzleisten der Stablage verlaufen.

Es ist aber auch möglich, für die Aussenschichten unterschiedliche Werkstoffe zu verwenden.

Weitere zweckmässige Ausgestaltungen und Weiterbildungen der Erfindung sind in den Unteransprüchen 9 und 10 gekennzeichnet.

Ein bevorzugtes Ausführungsbeispiel für eine Leichtbauplatte mit einer Stäbchenlage wird nachfolgend unter Bezugnahme auf die Zeichnung näher erläutert. In dieser zeigt:
- Figur 1: die Leichtbauplatte gemäss der Erfindung, in teilweise abgebrochener, perspektivischer Ansicht und
- Figur 2: die Einzelheit II-II gemäss Figur 1.

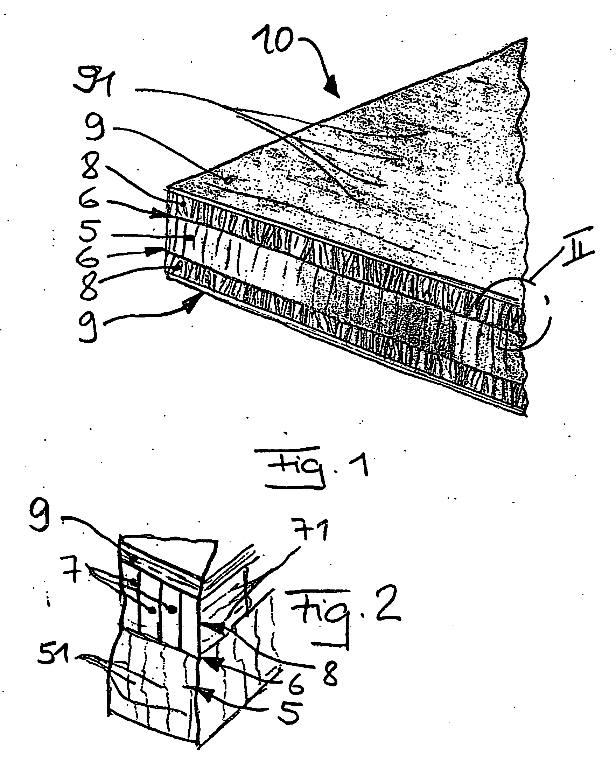

Die in Figur 1 gezeigte Leichtbauplatte 10 weist mit der Kernschicht 5 als Leichtholz eine massive Schicht eines Balsa-Hirnholzes auf, dessen Holzfasern beziehungsweise Kapillaren 51 im wesentlichen rechtwinklig zu den beiden zueinander parallelen Plattenebenen 6 der Kernschicht 5 verlaufen.

An die beiden Plattenebenen 6 der Kernschicht schliessen sich nach aussen je eine damit verbundene und als im wesentlichen rechtwinklig zu und auf jeder Plattenebene 6 angeordneten Lage aus miteinander verleimten Stäbchen 7 -sogenannte Stäbchenlage 8-auf, wobei die Holzfasern 71 aller Stäbchen sowohl zueinander als auch bezüglich der Plattenebenen 6 im wesentlichen parallel und zu den Holzfasern beziehungsweise Kapillaren 51 der Kernschicht 5 (Figur 2) rechtwinklig verlaufen. Die also aus Holzwerkstoffen bestehenden Stäbchen 7 der Stäbchenlage 8 sind aus Schälfurnieren gebildet und miteinander sowie der Kernschicht 5 verleimt.

An die beiden Stäbchenlagen 8 schliessen sich als Absperrung je eine Aussenschicht 9 an, die beim Ausführungsbeispiel aus je einer Furnierschicht gebildet sind, deren Holzfasern 91 parallel zu der Aussenschicht 9 und der Plattenebene 6 und zugleich rechtwinklig zu jenen Fasern 71 der Stäbchen 7 der Stäbchenlage 8 verlaufen.

## Patentansprüche

1. Leichtbauplatte (10) aus miteinander verbundenen, vorzugsweise verklebten Lagen aus Werkstoffen, insbesondere Möbel- oder Küchenplatte oder für den Einsatz in Luft-, Wasser- und Landfahrzeugen, mit einer mittleren Lage einer Massivholz-Kernschicht (5) aus Hirnholz mit zwei im wesentlichen senkrecht zu deren Holzfasern beziehungsweise Kapillaren (51) sowie zueinander parallelen Plattenebenen (6) und mit zumindest je einer, den äusseren Abschluss der Leichtbauplatte (10) bildenden Aussenschicht (9) beiderseits der die Kernschicht (5) bildenden Lage, die aus einem Leichtholz mit einer Dichte von unter 250 kg/m³ besteht, **dadurch gekennzeichnet, dass** zwischen der Kernschicht (5) und zumindest einer der beiden Aussenschichten (9) eine damit verbundene Lage (8) aus im wesentlichen gleich geformten, langgestreckten und nur nebeneinander angeordneten sowie in dieser Anordnung miteinander verleimten quaderförmigen Stücken (7) aus Holz vorgesehen ist, wobei die Kapillaren beziehungsweise Holzfasern (71) der quaderförmigen Stücke (7) aller dieser Stücke der Lage (8) sowohl zueinander als auch bezüglich der Plattenebene (6) im wesentlichen parallel verlaufen.

2. Platte nach Anspruch 1, **dadurch gekennzeichnet, dass** die Lage als sogenannte Stäbchenlage (8) ausgebildet ist, bei der die im Querschnitt rechteckförmigen einzelnen Stäbchen (7) mit ihrer schmalseite die Kernschicht (5) und mit ihrer Breitseite einander berühren und damit hochkant auf der Plattenebene (6) stehen.

3. Platte nach Anspruch 2, **dadurch gekennzeichnet, dass** die Stäbchen (7) der Stäbchenlage (8) aus miteinander verleimten und senkrecht zur Plattenebene angeordneten Schälfurnieren gebildet sind.

4. Platte nach Anspruch 1, **dadurch gekennzeichnet, dass** die Lage als sogenannte Stablage (8) mit einzelnen Leisten ausgebildet ist, bei der die im Querschnitt rechteckförmigen einzelnen Leisten (7) mit ihrer Breitseite die Kernschicht (5) und mit ihrer Schmalseite einander berühren und damit flach auf der Plattenebene (6) liegen.

5. Platte nach einem der Ansprüche 1 bis 3, **dadurch gekennzeichnet, dass** als Kernschicht (5) Balsaholz vorgesehen ist.

6. Platte nach einem der Ansprüche 1 bis 5, **dadurch gekennzeichnet, dass** zumindest eine der beiden Aussenschichten (9) aus einem Holzwerkstoff besteht.

7. Platte nach Anspruch 6, **dadurch gekennzeichnet, dass** die Aussenschicht (9) eine Furnierschicht ist.

8. Platte nach Anspruch 7, **dadurch gekennzeichnet, dass** die Fasern (91) der Furnierschicht (9) parallel zu der Plattenebene (6) und rechtwinklig zu den Holzfasern (71) der Lage (8) verlaufen.

9. Platte nach einem der Ansprüche 1 bis 8, **dadurch gekennzeichnet, dass** die Werkstoffschichten mittels Harnstoffharz-Formaldehyd-Klebstoff (KUF) oder polyvinyl-Acetat-Klebstoff (KPVAC) miteinander verklebt sind.

10. Platte nach einem der Ansprüche 1 bis 9, **dadurch gekennzeichnet, dass** die Aussenseite der Aussenschicht (9) mit einem weiteren Schichtstoff beschichtet ist.

## Claims

1. Lightweight panel (10) made of interconnected, preferably glued, layers of materials, in particular, a furniture panel or kitchen panel or a panel for use in aircraft, watercraft and land vehicles, with a middle layer comprising a solid-wood core (5) made of cross-cut wood with two panel planes (6) substantially perpendicular to its wood fibres or respectively capillaries (51) and parallel to one another, and with respectively at least one outer layer (9) forming the outer closure of the lightweight panel (10) on both sides of the layer forming the core (5), which consists of a lightweight timber with a density below 250 kg/m³,
**characterised in that**,
a layer (8) consisting of substantially identically shaped, elongated cuboid pieces (7) made of wood and merely arranged alongside one another and glued to one another in this arrangement is provided between the core (5) and at least one of the two outer layers (9), to which it is connected, wherein the capillaries or respectively wood fibres (71) of the cuboid pieces (7) of all of these pieces of the layer (8) extend in a substantially parallel manner both relative to one another and also relative to the panel plane (6).

2. Panel according to claim 1,
**characterised in that**
the layer is formed as a so-called edgeways-block layer (8), in which the individual blocks (7) of rectangular cross-section are disposed with their narrow side in contact with the core (5) and with their broad side in contact with one another and are therefore disposed edgeways on the panel plane (6).

3. Panel according to claim 2,
**characterised in that**
the blocks (7) of the block layer (8) are formed from rotary-cut veneers glued to one another and arranged perpendicular to the panel plane.

4. Panel according to claim 1,
**characterised in that**
the layer is designed as a so-called flat-block layer (8) with individual strips, in which the individual strips (7) of rectangular cross-section are disposed with their broad side in contact with the core (5) and with their narrow side in contact with one another and are therefore disposed flat on the panel plane (6).

5. Panel according to any one of claims 1 to 3,
**characterised in that**
balsa wood is provided as the core (5).

6. Panel according to any one of claims 1 to 5,
**characterised in that**
at least one of the two outer layers (9) consists of a timber material.

7. Panel according to claim 6,
**characterised in that**
the outer layer (9) is a veneer layer.

8. Panel according to claim 7,
**characterised in that**
the fibres (91) of the veneer layer (9) extend parallel to the panel plane (6) and at right angles to the wood fibres (71) of the layer (8).

9. Panel according to any one of claims 1 to 8,
**characterised in that**
the material layers are glued to one another by means of urea-formaldehyde-resin adhesive (UFR) or polyvinyl-acetate adhesive (PVA).

10. Panel according to any one of claims 1 to 9,
**characterised in that**
the external side of the outer layer (9) is coated with a further coating material.

## Revendications

1. Panneau léger (10) formé par des couches de matériaux reliées entre elles, de préférence collées, en particulier panneau de meuble ou de cuisine ou pour l'utilisation dans des aéronefs, des bateaux et des véhicules terrestres, comportant une couche centrale de bout d'une âme (5) en bois massif avec deux plaques planes (6) parallèles entre elles et sensiblement perpendiculaires aux fibres de bois ou capillaires (51) de l'âme, ainsi qu'au moins respectivement une couche extérieure (9), formant le recouvrement extérieur du panneau léger (10) et disposée de part et d'autre de la couche formant l'âme (5), qui est réalisée en bois léger avec une densité inférieure à 250 kg/m³, **caractérisé en ce qu'**il est prévu, entre l'âme (5) et au moins une des deux couches extérieures (9), une couche (8) en bois reliée à celles-ci, formée par des bouts de bois (7) parallélépipédiques allongés, sensiblement de même forme et seulement disposés les uns à côté des autres et collés entre eux dans cet agencement, sachant que les capillaires ou fibres de bois (71) de tous ces bouts de bois (7) parallélépipédiques de la couche (8) sont sensiblement parallèles entre eux et parallèles aux plaques planes (6).

2. Panneau selon la revendication 1, **caractérisé en ce que** la couche est réalisée sous la forme d'une couche lamellée (8), dans laquelle les différentes lamelles (7) à section rectangulaire sont en contact avec l'âme (5) par leur petit côté et entre elles par leur grand côté et sont donc posées de chant verticalement sur la plaque plane (6).

3. Panneau selon la revendication 2, **caractérisé en ce que** les lamelles (7) de la couche lamellée (8) sont formées par des placages déroulés, collés entre eux et disposés perpendiculairement par rapport à la plaque plane.

4. Panneau selon la revendication 1, **caractérisé en ce que** la couche est réalisée sous la forme d'une couche à lattes (8) avec des lattes individuelles, dans laquelle les lattes (7) individuelles à section rectangulaire sont en contact avec l'âme (5) par leur grand côté et entre elles par leur petit côté et sont donc posées à plat sur la plaque plane (6).

5. Panneau selon l'une quelconque des revendications 1 à 3, **caractérisé en ce que** du bois de balsa est prévu pour former l'âme (5).

6. Panneau selon l'une quelconque des revendications 1 à 5, **caractérisé en ce qu'**au moins une des deux couches extérieures (9) est réalisée dans un matériau à base de bois.

7. Panneau selon la revendication 6, **caractérisé en ce que** la couche extérieure (9) est une couche de placage.

8. Panneau selon la revendication 7, **caractérisé en ce que** les fibres (91) de la couche de placage (9) sont parallèles à la plaque plane (6) et sont perpendiculaires aux fibres de bois (71) de la couche (8).

9. Panneau selon l'une quelconque des revendications 1 à 8, **caractérisé en ce que** les couches de matériau sont collées entre elles au moyen d'une colle de résine d'urée formaldéhyde (KUF) ou d'une colle d'acétate de polyvinyle (KPVAC).

10. Panneau selon l'une quelconque des revendications 1 à 9, **caractérisé en ce que** la face extérieure de la couche extérieure (9) est revêtue d'un autre stratifié.
